# EUROPEAN PATENT SPECIFICATION

(11) **EP 3 624 647 B1**
(45) Date of publication and mention of the grant of the patent: **20.09.2023**
(21) Application number: 18721862.3
(22) Date of filing: 18.04.2018
(51) Int. Cl.: A47G 23/16, B65D 55/02, G01C 9/18, G04F 1/06, G08B 5/06, A47G 19/22, G08B 21/24

(54) **DRINKING VESSEL WITH TILT-INDICATING DEVICE**
TRINKGEFÄSS MIT NEIGUNGSANZEIGEVORRICHTUNG
RÉCIPIENT À BOIRE À DISPOSITIF D'INDICATION D'INCLINAISON

(30) Priority: 18.05.2017 GB 201707985
(43) Date of publication of application: 25.03.2020
(73) Proprietor: Porter, Rebecca, Rendlesham, Woodbridge IP12 2GR (GB)
(72) Inventor: Porter, Rebecca, Rendlesham, Woodbridge IP12 2GR (GB)
(74) Representative: Dummett Copp LLP
(86) International application number: PCT/IB2018/052678
(87) International publication number: WO 2018/211339

(56) References cited:
- WO-A1-2015/111058
- CN-U- 204 617 788
- DE-A1- 2 558 403
- DE-U1- 29 710 177
- JP-U- H0 489 074
- JP-U- S4 853 980
- JP-U- S61 204 577
- US-B1- 9 619 991

## Description

### FIELD OF THE INVENTION

The present invention relates to a drinking vessel, in particular a drinking vessel which has a device for monitoring drinking. The drinking vessel is particularly but not exclusively, for monitoring liquid intake of vulnerable patients or the like.

### BACKGROUND

Increasingly ageing populations across many societies lead to problems in caring, particularly where ageing people become vulnerable.

Maintaining liquid intake can be problematic for vulnerable persons, and by extension a problematic task for carers of vulnerable people.

Carers need to ensure, often in busy environments, that their charges or users are maintaining hydration. Commercial solutions exist but such digital water trackers are expensive and focussed on a healthy living active lifestyle market.

CN 204 071 517 (LIU) discloses a repeated water drinking reminding device. The repeated water drinking reminding device comprises a prompter and a cup body fixing device, wherein the prompter is an object, and different surfaces of the object have different colours, different patterns or different shapes; the prompter can rotate for 360 degrees. The prompter can be formed by a plurality of prompter parts which are separated from one another, and can be an integrated part of which different parts can rotate independently. The prompter and the cup body fixing device are connected. The surfaces with the different colours, the different patterns or the different shapes can be shown through the rotation of the prompter, so that one colour, one pattern or one shape is shown before a person drinks water, and another colour, another pattern or another shape is shown through the rotation after the person drinks water. The function of reminding the person to repeatedly drink water is realized by the change comparison of the colours, the patterns or the shapes.

WO 201 524 575 (GUSTAFSSON) discloses a device arranged to be used as a cup or a cup holder for liquid or medicaments and/or for receiving a cup for liquid or medicaments comprising: a receptacle for storing said liquid, medicament or cup. The invention is characterized in that said device further comprises a time assessment device, a motion sensor, and communication means. The invention further relates to a method to alert a cup or cup holder user that the cup or cup holder has not been used for a certain time period. The method comprises the steps of: starting said time assessment device, checking if said motion sensor has detected motion, and resetting the time assessment device in the case of detected motion, triggering the communication means to communicate when the time assessment device has reached a first pre-determined time assessment.

CN 204 617 788 U discloses a drinking vessel according to the preamble of claim 1. This drinking vessel comprising a side wall defining an open topped container, and a base; and a tilt-indicating device for visibly indicating when the container has been tilted.

The present invention arose in order to overcome problems suffered by existing devices.

### SUMMARY OF THE INVENTION

According to the invention there is provided a drinking vessel as specified in claim 1. Preferred features are specified in the dependent claims.

The invention provides a drinking vessel which incorporates a mechanism to indicate if it has not been drunk from for a period of time, for example around 2 hours.

The indication may be visible from a distance, for example around 3-5 meters away. This distance may help to alert a care-giver or nurse if there is a risk that a client or patient may be getting dehydrated. In particular nurses move through wards quickly and need to easily identify those who are not drinking.

The container may be dishwasher safe and does not require batteries or other external power sources. For example the drinking vessel and the tilt-indicating device may be able to withstand a wash cycle of between 61 and 70°C, with exposure to dishwash chemicals, followed by a rinse cycle at no less than 82°C for no less than 10 seconds. The drinking vessel and tilt-indicating device must also be able to work in environments such as hospital wards which tend to be very warm.

The drinking vessel may thereby be arranged, styled and constructed for hospital or care-home patients/residents, particularly elderly people.

Some embodiments of the device may comprise a plastic cup, similar in form to existing hospital/care-home plastic cups, with the ability to make a nurse or carer aware if the patient has taken a drink within a 2 hour period that is started when the container has been filled. Preferred embodiments may be arranged to demonstrate how much someone is drinking but be more concerned with "if' the patient is drinking.

The tilt-indication device may be arranged to be functional when the container is filled halfway and needs to be light as patients tend to be weak.

The tilt-indication device may be arranged to be activated and able to show if a user has or has not taken a sip for the 2- hour period in which the water is in the container.

Preferred embodiments are simple to ensure a practical price point, and lightweight to maximise usability for vulnerable or compromised users, and have a similar lifespan to existing cups so as to ensure cost-effectiveness.

The indications may comprise analogue 100ml and 200ml indicator levels.

In the preferred embodiments the drinking vessel does not require input or additional work for the nurse or carer and the device is easy to clean. In this way the invention enable nurses or carers to be more efficient by focusing their limited time on patients who are not drinking.

The drinking vessel does not change its appearance merely because it has been lifted up; a change of appearance is triggered by tipping the drinking vessel or tilting the device.

In use it may be envisaged that the container is liable to be filled halfway to be light as users may be envisaged to tend to be weak.

Variant embodiments of the device may comprise a sippy-cup embodiment, or a dementia embodiment (using a red coloured container, because people with late stage dementia find a red glass easier to see). A standard embodiment may be a clear/white version with 100ml and 200ml indicator levels.

The invention enables nurses and carers to be more efficient by focusing their limited time on patients who are not drinking.

For medical aesthetic reasons the drinking vessel may be similar to existing cups used in hospital.

### BRIEF DESCRIPTION

The invention will now be further described, by way of example only, with reference to the following drawings, in which:
Figure 1 shows an exploded isometric view of a first embodiment of a drinking vessel in accordance with the present invention;
Figure 2 shows a first isometric sectional view of the assembled embodiment shown in Figure 1;
Figure 3 shows a second isometric sectional view of the assembled embodiment shown in Figure 1;
Figures 4A-C show isometric sectional views of a tilt-indicating device in accordance with another aspect of the present invention;
Figures 5-6 show, respectively, a top plan view and a perspective view of part of a tilt-indicating device in accordance with a further embodiment of an aspect of the present invention;
Figure 7 shows a sectional view through the device of Figures 5 and 6, with a housing;
Figure 8 shows isometric views of a drinking vessel in accordance with another embodiment of the present invention;
Figures 9A and 9B show isometric views of the tilt-indicator device used for the device shown in Figure 8; and
Figures 10A and 10B show further isometric views of tilt-indicator devices for the drinking vessel shown in Figure 8.

### DETAILED DESCRIPTION

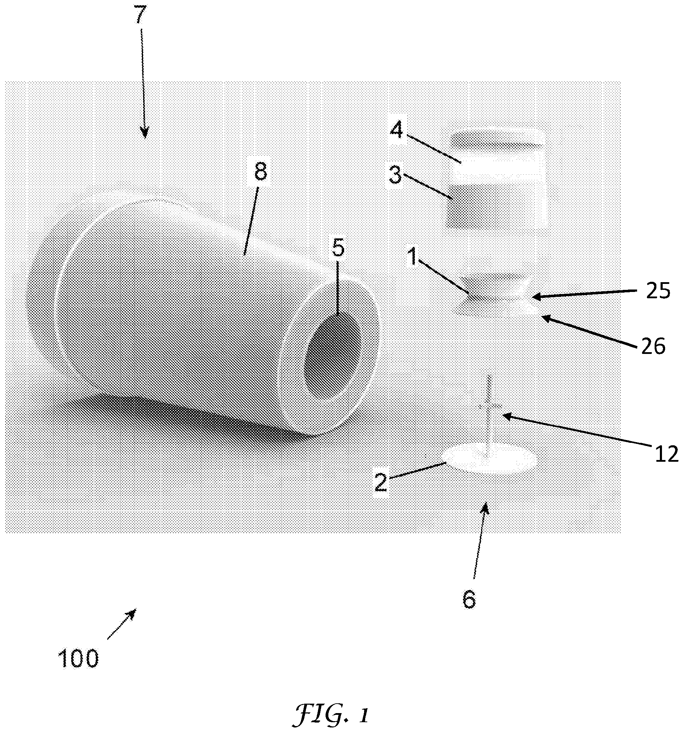

With reference to the first embodiment 100 shown in Figures 1-3, there is provided a drinking vessel comprising a sidewall 8 defining an open topped container 7, and a base 2. The drinking vessel 100 has a tilt-indicating device 6 for visibly indicating when the container has been tilted, which will occur when a user tilts the container 7 to take a drink.

The device 6 is arranged to indicate if the container has not been drunk from within a specified time period, for example about 2 hours. This indication should be visible from around 3-5 meters away and would help to alert a care-giver or nurse if there is a risk that a client or patient may be getting dehydrated. The drinking vessel is dishwasher-safe and does not use batteries or other external power sources. The embodiment thereby provides a container 7 which may be a plastic cup similar in form to existing hospital/care-home plastic cups, with the ability to make a nurse or carer aware if the patient has taken a drink within a 2 hour period.

In this embodiment, the tilt-indicator device 6 is permanently located inside the container 7, in this example a 1.5mm thick injection moulded polypropylene container 7 which is transparent or translucent. The device 6 in this embodiment has a support member 12 provided on the base 2. A flow control member 1 is mounted on the support member 12, and a housing 3 is located over the flow control member 1 and support member 12, forming a fluid-tight seal with the base 2. The housing 3 has a transparent or translucent portion 4 which provides a viewing window so that part of the inside of the housing 3 is visible through the container sidewall 8.

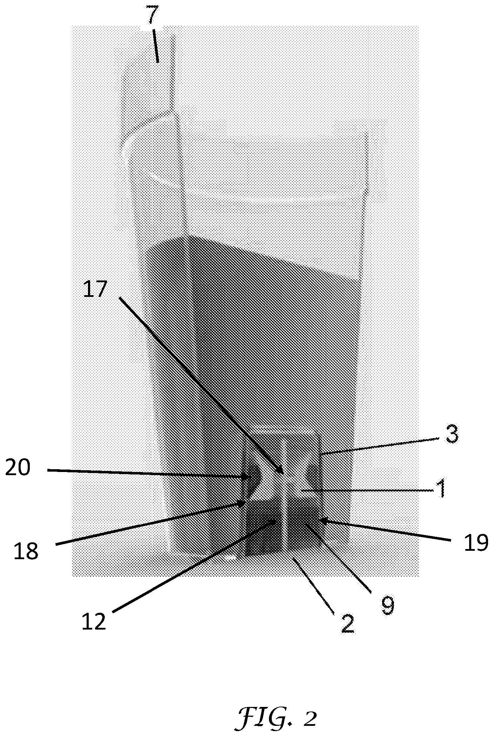

Referring to Figure 2, the volume beneath the flow control member 1 defines a reservoir 19 within which is an indicator fluid 9, in this example a viscous liquid such as glycerol, a sol or a gel. The indicator fluid could alternatively comprise a fine particulate material such as a powder or sand which will flow freely under gravity. The indicator fluid preferably includes a colouring agent for ease of visibility.

The flow control member 1 in this embodiment has a waist portion 25 which co-operates with an inner surface of the viewing window 4 to define a display chamber 20 which is visible through the container sidewall 8.

The flow control member 1 has a hollow tubular core which provides a feed passage 17 through which indicator fluid 9 can freely flowfrom the reservoir 19 to the upper part of the inside of the housing 3 and into the display chamber 20 when the container 7 is sufficiently tilted. Part of the flow control member 1 (in this example the lowest circumferential portion 26) co-operates with an internal surface of the housing 3 to define a return passage 18 which permits indicator fluid 9 to drain from the display chamber 20 to the reservoir 19.

The return passage 18 is narrow relative to the feed passage 17. Indicator fluid 9 can flow through the feed passage 17 at a first speed and can drain through the return passage 18 at a second speed which is slower than the first speed. It will be appreciated that the size of the return passage 18 can be selected to allow a specific indicator fluid to pass through within a pre-set time, for example two hours. Without limiting the invention, the size of the return passage 18 might be determined by a gap between the flow control member 1 and the internal surface of the housing in the range 0.25 mm to 1 mm, notably 0.5 mm to 0.75 mm.

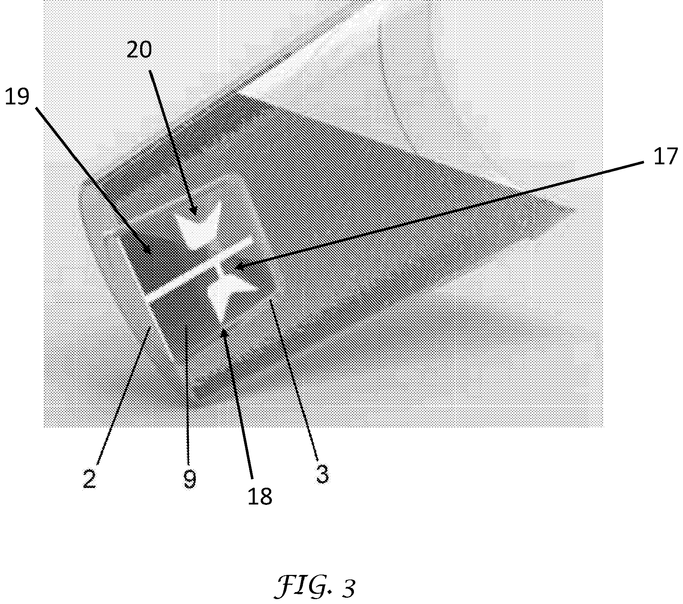

As the user tilts the container 7, to take a drink (Figure 3). Indicator fluid 9 flows from the reservoir 19 through the feed passage 18 and into the display chamber 20 relatively quickly, for example within 2-4 seconds. When the container 7 is returned to an upright position, indicator fluid drains slowly from the display chamber 20 through the return passage 18 over a period of about two hours. The indicator fluid 9 may be, for example, a viscous liquid which is bright green in colour and will be visible in lighter and darker environments.

When the indicator fluid is all within the reservoir 19, notably when the drinking vessel has been on a flat surface for two hours or more, the green liquid sits inactive and non-visible for the user. The visible presence of indicator fluid 9 in the display chamber 20 is evidence of a user having taken a drink from the container within the preceding two hours. In this way a carer may monitor whether regular sips are taken.

In manufacture the device 6 in this embodiment is assembled on the base 2 and inserted into a cavity 5 at the bottom of the container wall 8 and then permanently secured, for example via sonic welding. Accordingly, the base 2 in this example is common to the container 7 and the tilt-indicator device 6.

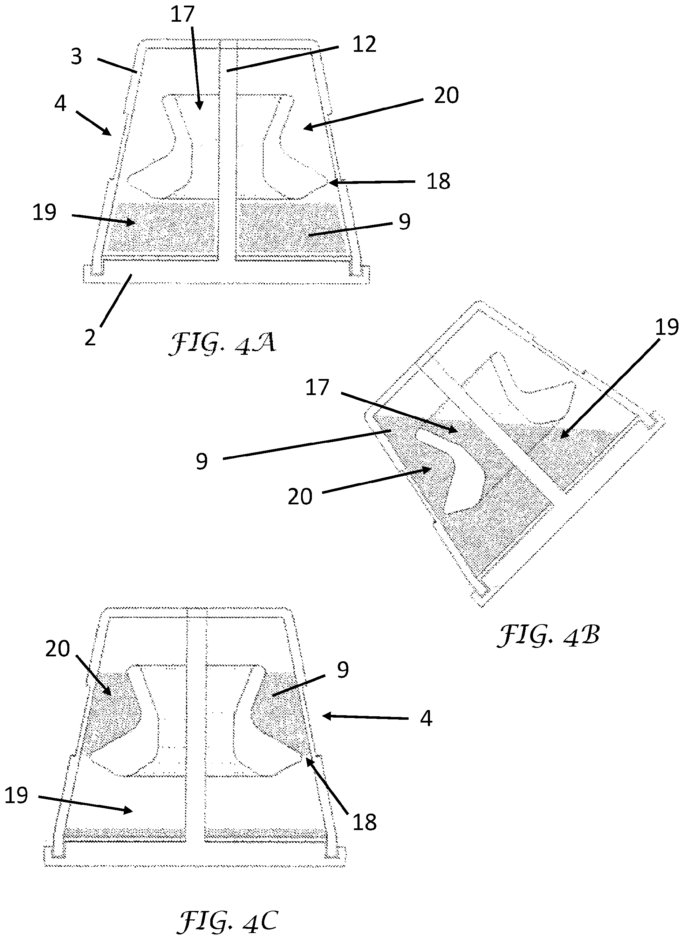

In other embodiments, the device 6 may be assembled and fixed to the base of a conventional container 7 by sonic welding or other appropriate means. One such embodiment of the tilt-indicating device is shown in Figures 4A-4C. In Figure 4A, the device is in an upright position in which the reservoir 19 is beneath the display chamber 20. The indicator fluid 9 is all contained within the reservoir 19. Tilting the device (Figure 4B) from the upright position to a tilted position in which at least some of the display chamber 20 is below at least part of the reservoir 19 permits indicator fluid to flow from the reservoir through the feed passage 17 to the display chamber at a first speed.

Returning the device from the tilted position to the upright position (Figure 4C) permits indicator fluid 9 to flow from the display chamber 20 to the reservoir 19 through the return passage 18 as a second speed which is slower than the first speed.

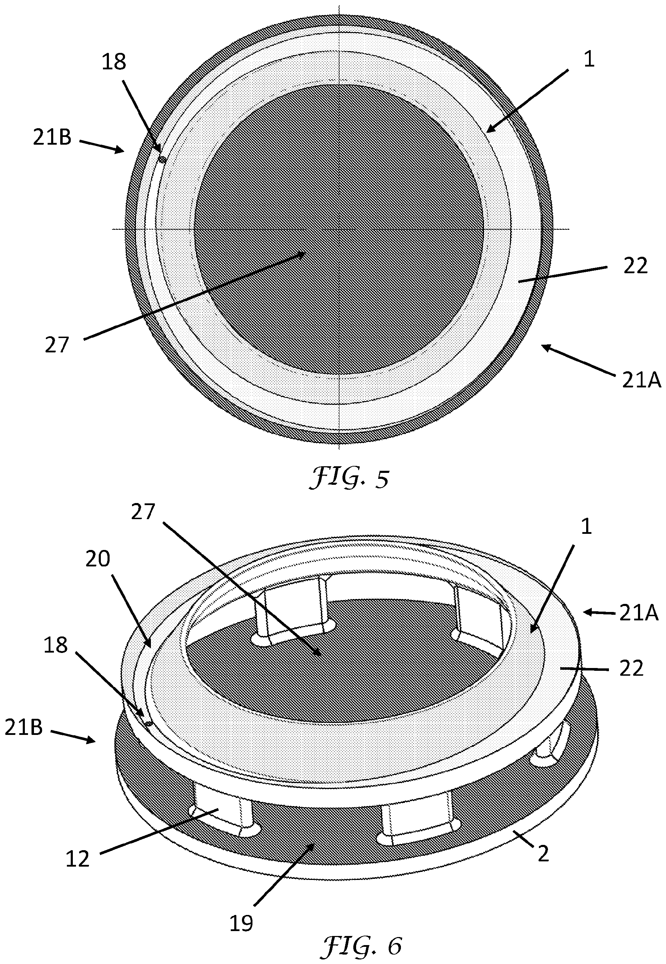

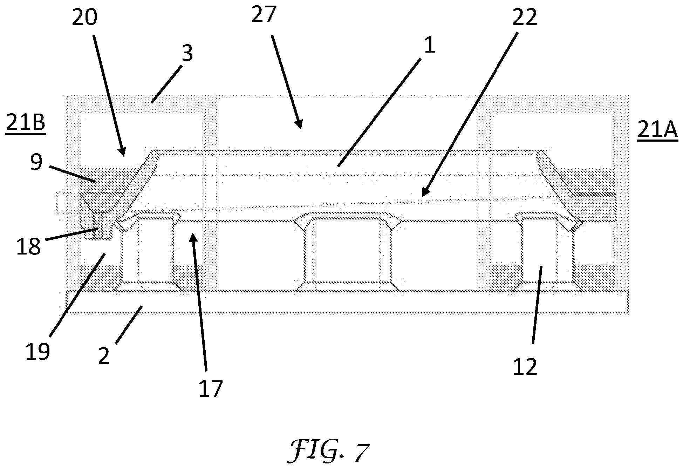

Referring now to Figures 5-7, a further embodiment of a tilt-indicating device is illustrated. In this embodiment, the flow control member 1 has a larger central space 27, some of which is available to allow extra volume for liquid within the container 7 when the device is mounted in a container. The housing 3 (not shown in Figures 5 and 6 for clarity) makes a sealing fit with the outer circumference of the flow control member and defines an annular space with the base 2 within which indicator fluid is contained. The flow control member 1 is supported by a plurality of support members 12 on the base.

The flow control member 1 has a floor 22 which slopes from a first end 21A to a second end 21B. A single return passage 18 from the floor 22 allows indicator fluid 9 to drain slowly from the display chamber 20. Without wishing to limit the invention, the diameter of the return passage 18 may in one embodiment be in the range 0.25 mm to 1 mm, notably 0.4 to 0.6 mm, and the length may in one embodiment in the range 1 to 6 mm, notably 2.5 to 4.5 mm. Preferred dimensions will depend on the flow characteristics of the indicator fluid and the desired dwell time.

It will be appreciated that other arrangements are possible, in which a plurality of passages 18 are provided in the flow control member 1, depending on the nature of the indicator fluid 9 and the desired dwell time for the indicator fluid in the display chamber.

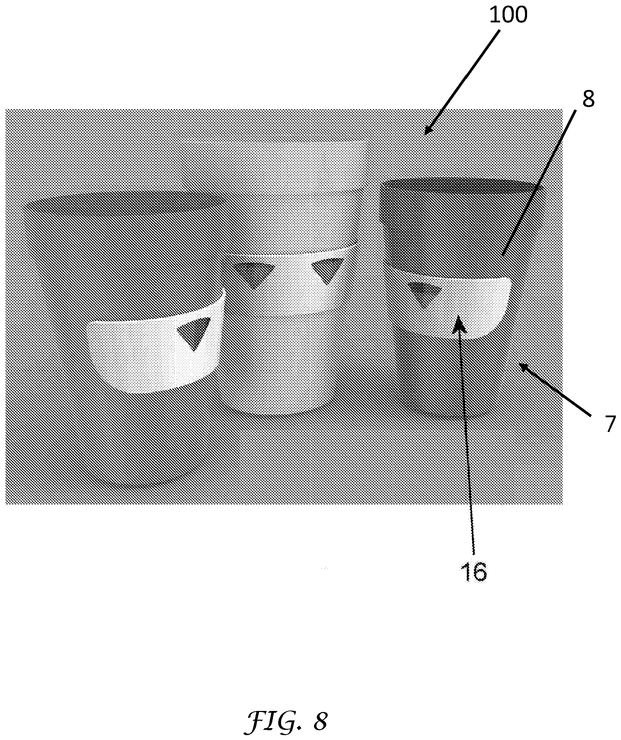

Referring now to Figure 8, a further embodiment of the drinking vessel 100 includes a flexible tilt-indicating device, which is applied to an external surface of the container wall 8 and which will be referred to by reference number 16.

This second embodiment is similar to previous embodiments, using a viscous liquid as an indicator fluid to show whether a user has had a drink within a pre-set time period, but comprises a retrofit device16 that may be affixed in use onto any existing drinking container 7.

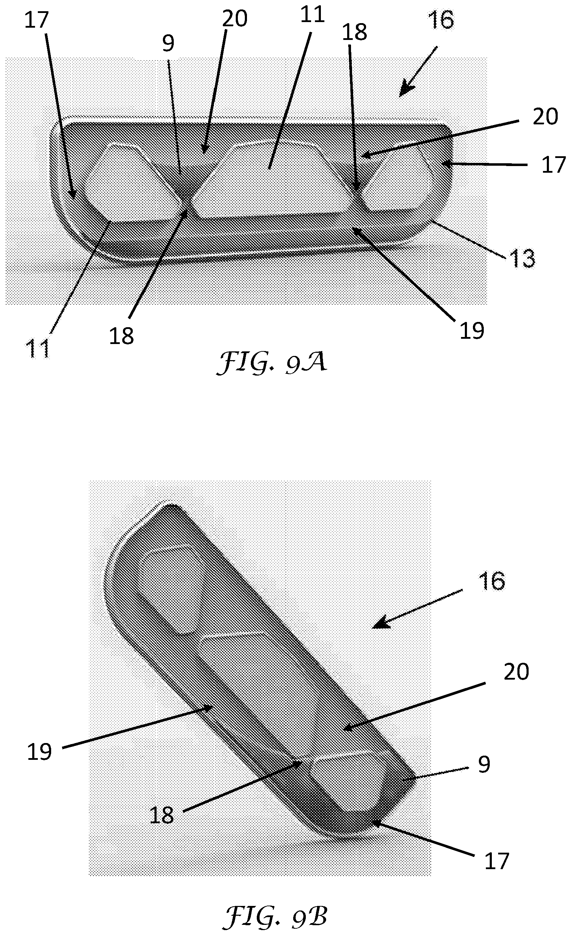

As shown in Figures 9A and 9B, the device 16 has internal structures 11 which cooperate with walls 13 of the device to define a reservoir 19, one or more display chambers 20, one or more feed passages 17, and one or more return passages 18.

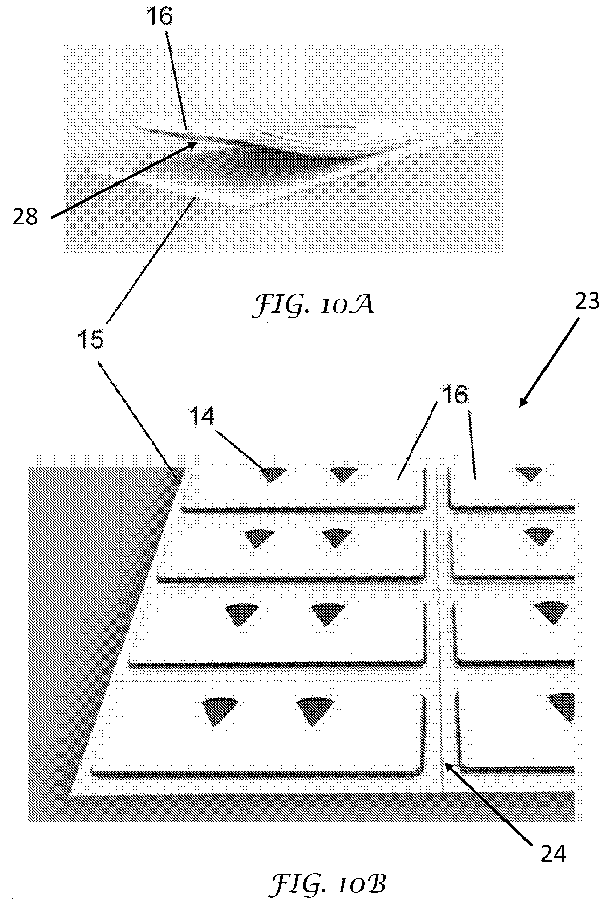

Referring now to Figures 10A and 10B, the device 16 comprises an adhesive surface 28 with a peelable backing sheet 15. The or each display chamber is visible through transparent windows 14. In the embodiment of Figure 10B, a device array 23 comprises a plurality of tilt-indicating devices 16 on a backing sheet 15. The device array 23 may for example contain 10 or 16 adhesive stickers. Preferably each tilt-indicating device 16 is separated from a neighbouring tilt-indicating device by a portion of sheet material 15 provided with a line of scoring or perforation 24 to facilitate separation of one device 16 from the device array. After separating a device 16, the carer removes the backing 15 to uncover the adhesive surface 28, and affixes the tilt-indicating device 16 onto any drinking vessel or container.

The indicator fluid 9 may have a green colouring to represent or indicate that the user has taken a drink. In the illustrated embodiment, there are two clear viewing windows 14 that are situated over both the triangular display chambers 20, which are spaced apart by internal structures 11. This is to make the alert visible from multiple angles for the doctor or nurse depending on the position that the user places the container down to rest, wherein a window being empty is an indicator or alert that the user has not had a drink in the last two hours.

The adhesive backing is preferably strong enough to allow the flexible tilt-indicating device16 to be attached to any of a variety of containers and to resist fluids and be resistant to a dishwasher machine wash.

In another embodiment, the tilt-indicating device may be provided in or on a receptacle which has an opening for receiving the base of the container. The receptacle may, for example, be in the form of a ring, or a toroid, into which a conventional cup is inserted, the cup being a close fit for the opening of the receptacle so that the receptacle will be lifted when the cup is lifted.

The articles 'a' and 'an' are used herein to mean 'at least one' unless the context requires otherwise.

The invention has been described by way of examples only and it will be appreciated that variation may be made to the above-mentioned embodiments without departing from the scope of invention as defined by the claims.

## Claims

1. A drinking vessel (100) comprising a side wall (8) defining an open topped container (7), and a base (2); and a tilt-indicating device (6, 16) for visibly indicating when the container (7) has been tilted; **characterised in that** the tilt-indicating device (6, 16) comprises:
a reservoir (19) and a display chamber (20);
an indicator fluid (9) in the reservoir (19);
a feed passage (17) connecting the reservoir (19) and the display chamber (20); and
a return passage (18) which permits indicator fluid (9) to drain from the display chamber (20) to the reservoir (19); wherein
tilting of the container (7) from an upright position permits indicator fluid (9) to flow from the reservoir (19) through the feed passage (17) to the display chamber (20) at a first speed, and
returning the container (7) from a tilted position to the upright position permits indicator fluid (9) to flow from the display chamber (20) to the reservoir (19) through the return passage (18) at a second speed which is slower than the first speed.

2. A drinking vessel according to claim 1, wherein the indicator fluid (9) includes a colouring agent.

3. A drinking vessel according to claim 1, wherein the indicator fluid (9) is green in colour.

4. A drinking vessel according to any one of the preceding claims, wherein the indicator fluid (9) is a viscous liquid.

5. A drinking vessel according to any one of the preceding claims, wherein the tilt-indicating device (6) includes a housing (3) and a flow control member (1) within the housing (3); the return passage (18) being disposed through part of the flow control member (1) or being defined between part of the flow control member (1) and an internal surface of the housing (3).

6. A drinking vessel according to any one of the preceding claims, wherein the side wall (8) is formed from a transparent or translucent material and the tilt-indicating device (6) is located inside the container (7).

7. A drinking vessel according to claim 6, wherein the display chamber (20) is annular.

8. A drinking vessel according to claim 7, wherein the return passage (18) is provided at a single location within the display chamber (20), and wherein the display chamber (20) has a floor which slopes downwardly from a point on the display chamber (20) opposite the return passage (18).

9. A drinking vessel according to any one of claims 6-8, wherein the return passage (18) is located closer to the side wall (8) of the container (7) than is the feed passage (17).

10. A drinking vessel according to any one of the preceding claims, wherein the side wall (8) of the container (7) has a red colour.

11. A drinking vessel according to any one of claims 1-5, wherein the tilt-indicating device (16) is affixed to the side wall (8) of the container (7) by an adhesive material.

## Patentansprüche

1. Trinkgefäß (100), aufweisend eine Seitenwand (8), die einen oben offenen Behälter (7) definiert, und einen Boden (2); und eine Neigungsanzeigevorrichtung (6, 16) zur visuellen Anzeige, wann der Behälter (7) gekippt worden ist; wobei die Neigungsanzeigevorrichtung (6, 16) aufweist:
einen Vorratsbehälter (19) und eine Anzeigekammer (20);
ein Indikatorfluid (9) in dem Vorratsbehälter (19);
einen Zufuhrkanal (17), der den Vorratsbehälter (19) und die Anzeigekammer (20) verbindet; und
einen Rückführkanal (18), der es Indikatorfluid (9) ermöglicht, aus der Anzeigekammer (20) zu dem Vorratsbehälter (19) abzufließen; wobei
das Kippen des Behälters (7) aus einer aufrechten Position es dem Indikatorfluid (9) ermöglicht, mit einer ersten Geschwindigkeit aus dem Vorratsbehälter (19) durch den Zufuhrkanal (17) zu der Anzeigekammer (20) zu strömen, und
das Rückführen des Behälters (7) aus einer geneigten Position in die aufrechte Position es dem Indikatorfluid (9) ermöglicht, mit einer zweiten Geschwindigkeit, die langsamer als die erste Geschwindigkeit ist, durch den Rückführkanal (18) von der Anzeigekammer (20) zu dem Vorratsbehälter (19) zu strömen.

2. Trinkgefäß nach Anspruch 1, wobei das Indikatorfluid (9) einen Farbstoff enthält.

3. Trinkgefäß nach Anspruch 1, wobei das Indikatorfluid (9) grün gefärbt ist.

4. Trinkgefäß nach einem der vorstehenden Ansprüche, wobei das Indikatorfluid (9) eine viskose Flüssigkeit ist.

5. Trinkgefäß nach einem der vorstehenden Ansprüche, wobei die Neigungsanzeigevorrichtung (6) ein Gehäuse (3) und ein Durchflusssteuerelement (1) innerhalb des Gehäuses (3) aufweist; wobei der Rückführkanal (18) durch einen Teil des Durchflusssteuerelements (1) verläuft oder zwischen einem Teil des Durchflusssteuerelements (1) und einer Innenfläche des Gehäuses (3) definiert ist.

6. Trinkgefäß nach einem der vorstehenden Ansprüche, wobei die Seitenwand (8) aus einem transparenten oder transluzenten Material gebildet ist und sich die Neigungsanzeigevorrichtung (6) im Inneren des Behälters (7) befindet.

7. Trinkgefäß nach Anspruch 6, wobei die Anzeigekammer (20) ringförmig ist.

8. Trinkgefäß nach Anspruch 7, wobei der Rückführkanal (18) an einer einzigen Stelle innerhalb der Anzeigekammer (20) vorgesehen ist, und wobei die Anzeigekammer (20) einen Boden aufweist, der von einem Punkt der Anzeigekammer (20) gegenüber dem Rückführkanal (18) nach unten geneigt ist.

9. Trinkgefäß nach einem der Ansprüche 6 bis 8, wobei sich der Rückführkanal (18) näher an der Seitenwand (8) des Behälters (7) befindet als der Zufuhrkanal (17).

10. Trinkgefäß nach einem der vorstehenden Ansprüche, wobei die Seitenwand (8) des Behälters (7) eine rote Farbe aufweist.

11. Trinkgefäß nach einem der Ansprüche 1 bis 5, wobei die Neigungsanzeigevorrichtung (16) durch ein Klebematerial an der Seitenwand (8) des Behälters (7) befestigt ist.

## Revendications

1. Récipient à boire (100) comprenant une paroi latérale (8) délimitant un contenant à partie haute ouverte (7), et une base (2) ; et un dispositif d'indication d'inclinaison (6, 16) destiné à indiquer de manière visible que le contenant (7) a été incliné ; **caractérisé en ce que** le dispositif d'indication d'inclinaison (6, 16) comprend :
un réservoir (19) et une chambre d'affichage (20) ;
un fluide indicateur (9) contenu dans le réservoir (19) ;
un passage d'amenée (17) raccordant le réservoir (19) et la chambre d'affichage (20) ; et
un passage de retour (18) qui permet au fluide indicateur (9) de s'écouler de la chambre d'affichage (20) vers le réservoir (19) ; dans lequel
une inclinaison du contenant (7) depuis une position verticale permet au fluide indicateur (9) de s'écouler du réservoir (19) par l'intermédiaire du passage d'amenée (17) jusqu'à la chambre d'affichage (20) à une première vitesse, et
un retour du contenant (7) d'une position inclinée à la position verticale permet au fluide indicateur (9) de s'écouler de la chambre d'affichage (20) jusqu'au réservoir (19) par l'intermédiaire du passage de retour (18) à une seconde vitesse qui est plus lente que la première vitesse.

2. Récipient à boire selon la revendication 1, dans lequel le fluide indicateur (9) comprend un agent colorant.

3. Récipient à boire selon la revendication 1, dans lequel le fluide indicateur (9) est de couleur verte.

4. Récipient à boire selon l'une quelconque des revendications précédentes, dans lequel le fluide indicateur (9) est un liquide visqueux.

5. Récipient à boire selon l'une quelconque des revendications précédentes, dans lequel le dispositif d'indication d'inclinaison (6) comprend un boîtier (3) et un élément de régulation d'écoulement (1) à l'intérieur du boîtier (3) ; le passage de retour (18) étant disposé à travers une partie de l'élément de régulation d'écoulement (1) ou étant délimité entre une partie de l'élément de régulation d'écoulement (1) et une surface interne du boîtier (3).

6. Récipient à boire selon l'une quelconque des revendications précédentes, dans lequel la paroi latérale (8) est formée d'un matériau transparent ou translucide et le dispositif d'indication d'inclinaison (6) est situé à l'intérieur du contenant (7).

7. Récipient à boire selon la revendication 6, dans lequel la chambre d'affichage (20) est annulaire.

8. Récipient à boire selon la revendication 7, dans lequel le passage de retour (18) est disposé au niveau d'un emplacement unique à l'intérieur de la chambre d'affichage (20), et dans lequel la chambre d'affichage (20) comporte une base qui est inclinée vers le bas depuis un point de la chambre d'affichage (20) opposé au passage de retour (18).

9. Récipient à boire selon l'une quelconque des revendications 6 à 8, dans lequel le passage de retour (18) est situé plus proche de la paroi latérale (8) du contenant (7) que ne l'est le passage d'amenée (17).

10. Récipient à boire selon l'une quelconque des revendications précédentes, dans lequel la paroi latérale (8) du contenant (7) est de couleur rouge.

11. Récipient à boire selon l'une quelconque des revendications 1 à 5, dans lequel le dispositif d'indication d'inclinaison (16) est apposé à la paroi latérale (8) du contenant (7) par un matériau adhésif.
